# FASCICULE DE BREVET EUROPEEN

(11) **EP 2 141 103 B1**
(45) Date de publication et mention de la délivrance du brevet: **15.02.2012**
(21) Numéro de dépôt: 09290488.7
(22) Date de dépôt: 25.06.2009
(51) Int. Cl.: B65H 29/14, B65H 31/02, H04N 1/00

(54) **Dispositif de traitement de feuilles pourvu de moyens évitant un bourrage lors de la réinsertion d'une feuille**
Vorrichtung zur Bearbeitung von Blättern, die mit Mitteln zur Verhinderung eines Papierstaus beim Wiedereinführen eines Blatts ausgestattet ist
Device for treating sheets equipped with means for preventing jamming when reinserting a sheet

(30) Priorité: 01.07.2008 FR 0803703
(43) Date de publication de la demande: 06.01.2010
(73) Titulaire: SAGEMCOM DOCUMENTS SAS, 92500 Rueil Malmaison (FR)
(72) Inventeur: Marcq, Frédéric, 92500 Rueil-Malmaison (FR)
(74) Mandataire: Beaudouin-Lafon, Emmanuel

(56) Documents cités:
- EP-A- 1 041 806
- US-A- 5 014 976
- US-A- 5 549 292
- US-A1- 2004 140 606

## Description

L'invention concerne un dispositif de traitement de feuilles en recto/verso, tel qu'un scanner capable de scanner successivement le recto et le verso des feuilles qu'il traite.

### ARRIERE PLAN DE L'INVENTION

Un tel appareil, qui est divulgué dans la demande de brevet EP2877331, est représenté sur les figures 1 à 3 en y étant repéré par 1. Il comporte un bac d'approvisionnement 2 contenant des feuilles 3, 4 à traiter, un chemin 6 dans lequel une feuille 7 est engagée et déplacée pour traiter successivement son recto et son verso, et un bac de collecte 8 contenant un empilement de feuilles 9, 10 et 11 préalablement traitées.

Le chemin 6 a une forme générale de boucle, il comporte une première et une seconde extrémité 13 et 14 débouchant conjointement dans une voie de transfert 16, ainsi qu'une entrée de feuilles 17 située entre ces extrémités 13 et 14. Un canal 18 permet l'acheminement de chaque feuille à traiter depuis le bac d'approvisionnement 2, vers l'entrée 17.

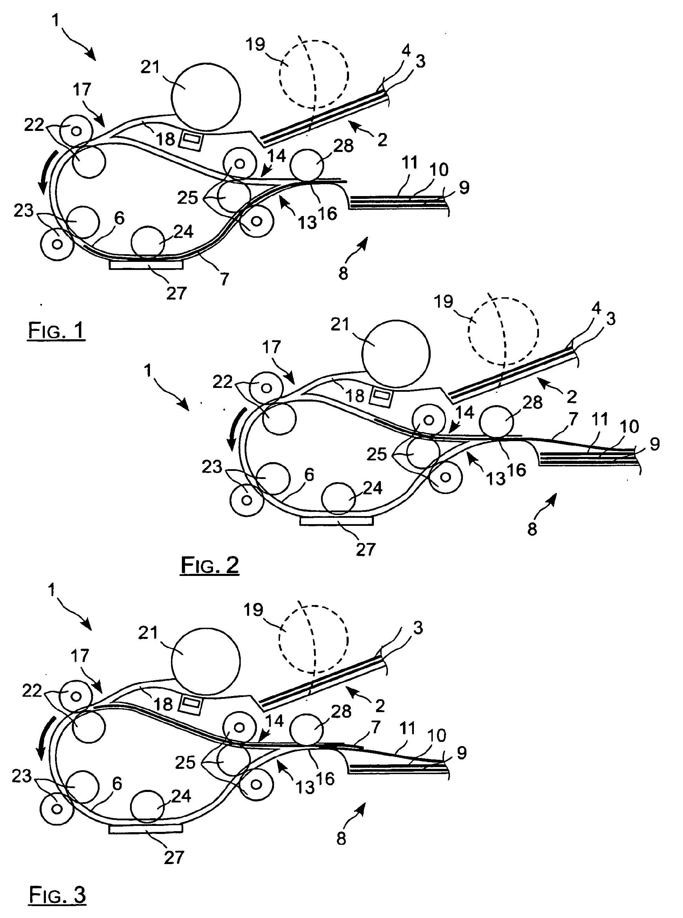

En fonctionnement, une feuille à traiter telle que la feuille 7 est d'abord extraite du bac 2 et transférée vers l'entrée 17 par deux rouleaux 19 et 21. Elle est ensuite déplacée vers la première extrémité 13 du chemin 6 par un ensemble de rouleaux 22 à 25. La feuille 7 passe alors devant un organe 27 qui scanne son recto, et sort par la première extrémité 13 du chemin 6, ce qui correspond à la situation de la figure 1.

La feuille 7 est ensuite extraite du chemin 6 via la première extrémité 13, par un rouleau 28, qui la place dans une situation où la majorité de cette feuille repose dans le bac de collecte 8, son extrémité restant pincée par le rouleau 28. Le rouleau 28 tourne ensuite en sens inverse pour introduire la feuille 7 dans le chemin 6, mais par la seconde extrémité 14 afin de la retourner, ce qui correspond à la situation de la figure 2.

La feuille 7 est alors déplacée dans le chemin 6 vers la première extrémité 13 pour présenter son verso à l'organe 27, afin de le scanner, et elle est ensuite extraite du chemin 6 par le rouleau 28, pour être cette fois-ci éjectée dans le bac de collecte 8.

Comme visible dans la figure 3, lors de la réintroduction de la feuille 7 par la seconde extrémité du chemin 6, la feuille supérieure du bac de collecte 8, à savoir la feuille 11, peut être entraînée avec la feuille 7 et se réintroduire dans la voie de transfert 16.

Cette situation constitue une source de bourrage, provoquant le blocage de l'appareil, nécessitant sa réinitialisation et son redémarrage. Dans le cas où la feuille 11 s'engage complètement dans le chemin 6 avec la feuille 7 sans provoquer de bourrage, cela provoque un déclassement des feuilles traitées dans le bac de collecte 8.

Ainsi, d'une manière générale, le risque de ravalement dans l'appareil d'une feuille déjà traitée est important, lors de l'opération de retournement.

Dans le document US5014976, un doigt déplaçable entre une position escamotée et une position déployée est porté par un support flexible le rappelant vers la position déployée. L'extraction d'une feuille par la voie de transfert place ce doigt dans une position intermédiaire où sa rampe supérieure est en appui contre la feuille, et dans laquelle il s'oppose par sa portion concave au ravalement d'une autre feuille.

### OBJET DE L'INVENTION

Le but de l'invention est de proposer une solution pour remédier à ces inconvénients.

### RESUME DE L'INVENTION

A cet effet, l'invention a pour objet un dispositif de traitement de feuilles, comportant un chemin dans lequel chaque feuille est déplacée pour être traitée, et des moyens d'extraction et d'insertion comportant une voie de transfert dans laquelle débouche au moins une extrémité du chemin, pour successivement extraire au moins partiellement une feuille de ce chemin et l'insérer dans ce chemin, comportant un doigt mobile entre une position escamotée et une position déployée dans laquelle il dépasse à l'intérieur de la voie de transfert, ainsi que des moyens de rappel de ce doigt vers sa position déployée, l'engagement d'une feuille dans la voie de transfert lors de son extraction plaçant ce doigt dans une position intermédiaire dans laquelle il est maintenu en appui contre une face de cette feuille par les moyens de rappel, caractérisé en ce que le doigt est porté par un levier monté rotatif sur un axe portant également un rouleau d'entraînement des moyens d'extraction et d'insertion, pour que ce doigt s'escamote en s'inclinant en direction opposée aux extrémités du chemin.

Avec cette solution, le doigt se place automatiquement en appui contre une face de la feuille en cours d'extraction. Lors de la réinsertion de la feuille extraite, ce doigt maintenu en appui constitue un obstacle s'opposant à l'engagement dans la voie de transfert d'une autre feuille située en vis-à-vis de la face sur laquelle il est en appui.

L'invention concerne également un dispositif tel que défini ci-dessus, dans lequel les moyens de rappel du doigt sont assurés par une position excentrée du centre de gravité du levier par rapport à son axe de rotation.

L'invention concerne également un dispositif tel que défini ci-dessus, dans lequel les moyens d'extraction et d'insertion comportent deux rouleaux d'entraînement situés en vis-à-vis l'un de l'autre.

### BREVE DESCRIPTION DES FIGURES

La figure 1 déjà décrite est une vue schématique en coupe d'un dispositif connu traitant le recto d'une feuille;
La figure 2 déjà décrite est une vue schématique en coupe du dispositif de la figure 1 lors de la réintroduction d'une feuille en vue du traitement de son verso ;
La figure 3 déjà décrite est une vue schématique en coupe du dispositif de la figure 1 lors d'un bourrage provoqué par le ravalement d'une feuille préalablement traitée ;
La figure 4 est une vue schématique en coupe du dispositif selon l'invention comportant une feuille dont le recto est en cours de traitement ;
La figure 5 est une vue schématique en coupe agrandie montrant les moyens d'extraction et d'introduction durant l'extraction d'une feuille en vue de la retourner ;
La figure 6 est une vue schématique en coupe agrandie montrant les moyens d'extraction lors de la réintroduction d'une feuille qui entraîne avec elle une autre feuille présente dans le bac sans provoquer de bourrage.

### DESCRIPTION DETAILLEE DE L'INVENTION

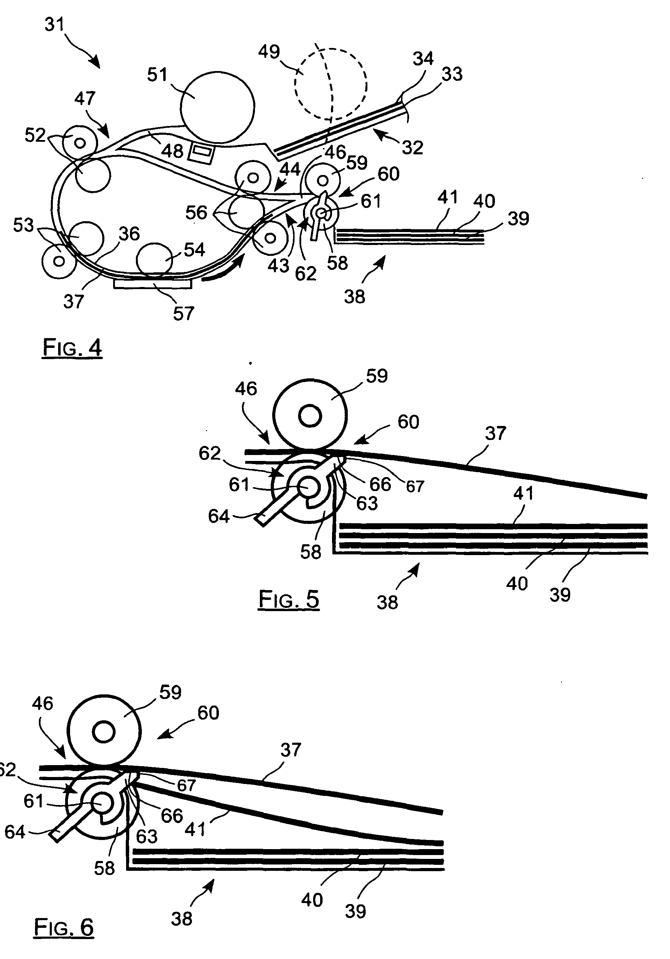

Dans l'exemple des figures, l'invention est appliquée à un scanner recto/verso repéré par 31. Comme visible en figure 4, ce scanner 31 comporte un bac d'approvisionnement 32 dans lequel sont empilées des feuilles 33 et 34 à traiter, un chemin 36 dans lequel une feuille 37 est engagée et déplacée pour traiter son recto et son verso, ainsi qu'un bac de collecte 38 dans lequel sont empilées trois feuilles 39, 40 et 41 préalablement traitées.

Ce chemin 36 a une forme générale en boucle, il comporte une première extrémité 43, une seconde extrémité 44 qui convergent vers une voie de transfert 46, ainsi qu'une entrée 47 de feuilles située entre ces extrémités. La première et la seconde extrémités 43 et 44 sont situées l'une au dessus de l'autre, elles constituent respectivement l'extrémité inférieure et l'extrémité supérieure du chemin 36.

Les feuilles sont transférées depuis le bac 32 vers l'entrée 47 via un canal d'approvisionnement 48, au moyen de deux rouleaux 49 et 51 situés respectivement au dessus du bac 32 et au niveau du canal 48 pour les déplacer successivement depuis le bac 32, vers le chemin 36 en entraînant ces rouleaux en rotation.

Chaque feuille est déplacée dans le chemin 36 par un ensemble de rouleaux entraînés en rotation. Deux rouleaux constituant une première paire 52 sont montés de part et d'autre du chemin 36, et deux autres rouleaux constituant une seconde paire 53 sont aussi montés de part et d'autre du chemin 36, tout en étant espacés de la première paire.

La première paire 52 est située en aval de l'entrée 47, la seconde paire 53 étant située en aval de la première, par rapport au sens de circulation des feuilles dans le chemin 36 tel qu'indiqué par une flèche dans les figures. Un scanner proprement dit 57 est monté le long du chemin 36, en aval de la seconde paire de rouleaux 53, un rouleau presseur 54 étant prévu en vis-à-vis de ce scanner 57 pour appliquer la feuille à traiter contre celui-ci.

Un groupe de trois autres rouleaux 56 est associé au chemin 36 en étant situé au niveau des extrémités 43 et 44. Il comprend un rouleau central ainsi qu'un rouleau inférieur en appui sur le rouleau central au niveau de l'extrémité inférieure 43 du chemin 36, ainsi qu'un rouleau supérieur en appui sur le rouleau central au niveau de l'extrémité supérieure 44 du chemin 36.

Le dispositif comprend d'autre part des moyens 60 pour extraire une feuille provenant de l'extrémité inférieure 43 du chemin 36 et pour la réinsérer dans ce chemin 36 via l'extrémité supérieure 44 afin de la retourner.

Ces moyens 60 comportent la voie de transfert 46, ainsi qu'un rouleau inférieur 58 et un rouleau supérieur 59 entraînés en rotation par des moyens non représentés. Ces rouleaux 58 et 59 sont situés de part et d'autre de la voie de transfert 46 et maintenus en appui l'un contre l'autre pour pincer une feuille passant dans cette voie de transfert 46 afin de la déplacer pour l'extraire ou pour l'insérer dans le chemin.

Comme visible dans la figure 4, le rouleau inférieur 58 est monté sur un axe 61 qui porte également un levier pivotant repéré par 62. Ce levier est mobile entre une position dite déployée correspondant à celle de la figure 4 et une position complètement escamotée, en ayant son mouvement limité par exemple par deux butées non représentées.

Ce levier comporte un doigt 63 qui s'étend selon une direction verticale dans les figures lorsqu'il est déployé, c'est à dire selon une direction normale au plan d'une feuille s'engageant dans la voie de transfert 46. Dans la position escamotée, lé doigt 63 est basculé de manière à être orienté selon une direction opposée aux extrémités 43 et 44. Autrement dit, lorsque le doigt est escamoté, complètement ou partiellement, il s'étend vers le bac de collecte 48, et non pas vers le chemin 36.

Ce levier 62 et le doigt 63 peuvent occuper toute position intermédiaire entre la position déployée et la position complètement escamotée, ce qui est le cas dans les figures 5 et 6 dans lesquelles le doigt 63 est partiellement escamoté.

Ces figures 5 et 6 montrent d'autre part que ce levier pivotant comporte un pied 64 formant masselotte, ce pied 64 et le doigt 63 s'étendant dans des directions opposées en étant situés de part et d'autre de l'axe 61 de rotation du levier 62.

Le pied 64 a une longueur supérieure à celle du doigt 63, de telle manière que le centre de gravité du levier 62 est excentré par rapport à l'axe 61, pour que le pied 64 assure le rappel du levier en position déployée, de par son poids propre. L'ensemble du levier 62 tend ainsi à s'orienter verticalement, comme dans la figure 4, le doigt 63 étant alors déployé pour dépasser à l'intérieur de la voie de transfert 46.

Lorsqu'une feuille provenant du chemin 36 dont elle est extraite, est introduite dans la voie de transfert 46, comme la feuille 37 dans la figure 5, son bord avant pousse le doigt 63 pour qu'il s'escamote partiellement en s'inclinant, l'extrémité de ce doigt 63 étant alors en appui sur une face de cette feuille 37, à savoir sa face inférieure dans le cas de la figure 5.

L'extrémité du doigt 63 comporte une face d'appui 66 et une face de blocage 67 perpendiculaires l'une à l'autre. Lorsque le doigt 63 est partiellement escamoté, la face d'appui 66 est maintenue contre la face inférieure de la feuille 37, la face de blocage 67 s'étendant alors perpendiculairement à cette face inférieure, pour que ce doigt 63 constitue un obstacle s'opposant au ravalement d'une autre feuille située en vis-à-vis de la face inférieure de la feuille 37.

Cette situation correspond à celle de la figure 6 : lorsque la feuille 37 est réengagée dans le chemin 36 par les moyens 60, une autre feuille 41 est également entraînée vers la voie de transfert 46, cette autre feuille 41 étant située en vis à vis de sa face inférieure.

Dans ce cas, lorsque cette autre feuille 41 arrive au niveau de l'extrémité du doigt 63, son bord butte contre ce doigt qui lui interdit ainsi de s'engager dans la voie de transfert 46, comme c'est le cas dans la figure 6. Ainsi, en phase de retournement, le doigt mobile 63 empêche les feuilles empilées dans le bac de collecte 38 d'être réintroduites.

En ce qui concerne l'emplacement transversal du levier, il est avantageusement situé au niveau du milieu du rouleau de manière à bloquer la feuille tendant à être ravalée tout en la maintenant parallèle à elle-même.

D'autre part, le dispositif peut être pourvu de deux leviers, montés de part et d'autre de la voie de transfert, pour venir en appui chacun contre l'une des faces de la feuille en cours de retournement ou d'éjection. Cette solution évite le ravalement d'une feuille située en vis-à-vis de la face supérieure de la feuille en cours de retournement.

Dans l'exemple des figures, les moyens de rappel du doigt dans sa position déployée sont assurés par l'excentration du centre de gravité du levier. Mais ces moyens de rappel peuvent aussi être assurés par des ressorts ou autres organes élastiques, ou encore par un système magnétique.

Comme on l'aura compris, le doigt mobile selon l'invention annule le risque de bourrage lors du retournement d'une feuille. Ceci permet notamment d'équiper les moyens d'insertion et d'extraction d'un second rouleau, tout en excluant le risque de ravalement d'une feuille déjà traitée susceptible d'être entraînée par ce second rouleau.

Dans l'exemple des figures, l'invention est appliquée à un scanner 31 de type recto/verso. Mais elle s'applique de façon générale aux appareils dans lesquels chaque feuille est successivement au moins partiellement extraite d'un chemin de traitement puis réinsérée dans ce chemin.

L'invention s'applique ainsi aux appareils de traitement de feuilles en recto/verso, et à d'autres appareils tels que notamment les imprimantes photo thermiques dans lesquelles chaque feuille est déplacée selon un mouvement de va et vient pour l'application successive de trois couleurs primaires.

## Revendications

1. Dispositif (31) de traitement de feuilles, comportant un chemin (36) dans lequel chaque feuille (37) est déplacée pour être traitée, et des moyens (60) d'extraction et d'insertion comportant une voie de transfert (46) dans laquelle débouche au moins une extrémité (43, 44) du chemin (36), pour successivement extraire au moins partiellement une feuille (37) de ce chemin (36) et l'insérer dans ce chemin, comportant un doigt (63) mobile entre une position escamotée et une position déployée dans laquelle il dépasse à l'intérieur de la voie de transfert (46), ainsi que des moyens de rappel (64) de ce doigt (63) vers sa position déployée, l'engagement d'une feuille (37) dans la voie de transfert (46) lors de son extraction plaçant ce doigt (63) dans une position intermédiaire dans laquelle il est maintenu en appui contre une face de cette feuille (37) par les moyens de rappel (64), **caractérisé en ce que** le doigt (63) est porté par un levier (62) monté rotatif sur un axe (61) portant également un rouleau (58) d'entraînement des moyens (60) d'extraction et d'insertion, pour que ce doigt s'escamote en s'inclinant en direction opposée aux extrémités (43, 44) du chemin (36).

2. Dispositif selon la revendication 1, dans lequel les moyens de rappel du doigt (63) sont assurés par une position excentrée du centre de gravité du levier (62) par rapport à son axe de rotation (61).

3. Dispositif selon l'une des revendications précédentes, dans lequel les moyens (60) d'extraction et d'insertion comportent deux rouleaux d'entraînement (58, 59) situés en vis-à-vis l'un de l'autre.

## Claims

1. A device (31) for processing sheets, the device including a path (36) in which each sheet (37) is moved in order to be processed, and extractor-and-inserter means (60) including a transfer channel (46) into which at least one end (43, 44) of the path (36) opens out in order successively to extract at least part of a sheet (37) from said path (36) and in order to insert it into said path, said means comprising a finger (63) that is movable between a retracted position and a deployed position in which it projects into the inside of the transfer channel (46), together with return means (64) urging said finger (63) towards its deployed position, the engagement of a sheet (37) in the transfer channel (46) while it is being extracted causing the finger (63) to be placed in an intermediate position in which it is held by the return means (64) to bear against a face of said sheet (37), the device being **characterized in that** the finger (63) is carried by a lever (62) pivotally mounted on a pin (61) that also carries a roller (58) for driving the extractor-and-inserter means (60) so that the finger is retracted by tilting away from the ends (43, 44) of the path (36).

2. A device according to claim 1, wherein the means for returning the finger (63) are provided by an eccentric position of the centre of gravity of the lever (62) relative to its pivot pin (61).

3. A device according to either preceding claim, wherein the extractor-and-inserter means (60) comprise two drive rollers (58, 59) situated facing each other.

## Patentansprüche

1. Vorrichtung (31) zur Bearbeitung von Blättern, umfassend eine Bahn (36), in der jedes Blatt (37) verschoben wird, um bearbeitet zu werden, und Entnahme- und Einfügemittel (60), die eine Übertragungsstrecke (46) umfassen, in die mindestens ein Ende (43, 44) der Bahn (36) mündet, um nacheinander ein Blatt (37) zumindest teilweise aus dieser Bahn zu entfernen und es in diese Bahn einzufügen, und die einen Finger (63) umfassen, der zwischen einer eingerückten Stellung und einer ausgefahrenen Stellung beweglich ist, in der er in die Übertragungsstrecke (46) hineinragt, sowie Rückstellmittel (64) zum Rückstellen dieses Fingers (63) in seine ausgefahrene Position, wobei das Einführen eines Blattes (37) in die Übertragungsstrecke (46) während seiner Entnahme diesen Finger (63) in einer Zwischenstellung anordnet, in der er durch die Rückstellmittel (64) in Anlage an einer Fläche dieses Blattes (37) gehalten wird, **dadurch gekennzeichnet, dass** der Finger (63) von einem Hebel (62) getragen wird, der drehbar an einer Achse (61) gelagert ist, die ferner eine Antriebsrolle (58) zum Antrieb der Entnahme- und Einfügemittel (60) trägt, damit dieser Finger einrückt, indem er sich in eine zu den Enden (43, 44) der Bahn (36) entgegengesetzte Richtung neigt.

2. Vorrichtung nach Anspruch 1, wobei die Rückstellmittel zum Rückstellen des Fingers (63) durch eine außermittige Position des Schwerpunkts des Hebels (62) relativ zu seiner Drehachse (61) sichergestellt werden.

3. Vorrichtung nach einem der vorhergehenden Ansprüche, wobei die Entnahme- und Einfügemittel (60) zwei Antriebsrollen (58, 59) umfassen, die einander gegenüberliegen.
